# EUROPÄISCHE PATENTANMELDUNG

(11) **EP 4 019 441 A2**
(43) Veröffentlichungstag der Anmeldung: **29.06.2022**
(21) Anmeldenummer: 21217535.0
(22) Anmeldetag: 23.12.2021
(51) Int. Cl.: B65G 65/42

(54) **SILO MIT DRUCKERFASSUNGSEINHEIT, VERFAHREN ZUR REGELUNG EINER MATERIALFÖRDERUNG UND VERWENDUNG EINER DRUCKERFASSUNGSEINHEIT**

(30) Priorität: 23.12.2020 DE 102020134826
(71) Anmelder: Wissing, Johannes, 48703 Stadtlohn (DE)
(72) Erfinder: Wissing, Johannes, 48703 Stadtlohn (DE)
(74) Vertreter: Habbel, Ludwig

(57) **Zusammenfassung**

Bei einem Silo (1) zur Aufnahme eines Materials, mit einem Behälter (10), wobei der Behälter (10) einen Boden (11) und wenigstens eine Seitenwand (12) aufweist und der Boden (11) und die Seitenwand (12) einen Füllraum (15) begrenzen, einer Austragseinheit (20) für einen dosierten Austrag des Materials aus dem Behälter (10), einer der Austragseinheit (20) nahen, als Austragswand (14) bezeichneten Seitenwand (12) oder Abschnitt einer Seitenwand (12), und einem Materialförderer (30), der das Material unter Ausbildung eines Materialstroms (36) zur Austragseinheit (20) und in Richtung zur Austragswand (14) fördert, schlägt die Erfindung eine Druckerfassungseinheit (40) vor, die dazu bestimmt ist, eine durch den Materialstrom (36) auf die Austragseinheit (20) und/oder auf die Austragswand (14) wirkende Druckbelastung zu erfassen, und die ein Ausgangssignal in Abhängigkeit von der Druckbelastung erzeugt. Ferner schlägt die Erfindung ein Verfahren zur Regelung einer Materialförderung und die Verwendung einer Druckerfassungseinheit (40) bei einem Silo (1) vor.

## Beschreibung

Zur Aufnahme eines schüttfähigen Materials betrifft die Erfindung ein Silo nach den Merkmalen im Oberbegriff des Anspruchs 1 und ein Verfahren zur Regelung einer Materialförderung nach den Merkmalen des Anspruchs 12 und die Verwendung einer Druckerfassungseinheit bei einem Silo nach Anspruch 15.

Silos kommen zur Anwendung, um in Funktion eines Speichers unterschiedlichste Materialien bzw. Materialgemische einzulagern, nachfolgend einheitlich als Material bezeichnet, wobei es sich dabei beispielsweise um mineralische Stoffe, wie Zement oder dergleichen, biologische Stoffe, wie Getreide, Gras, Mist, Kompost, Gärreste, Speisereste oder dergleichen, oder diverse Kunststoffe, beispielsweise als Folien, Schaumstoffe oder dergleichen, handeln kann. Die Struktur des Materials kann in vielfältigen Formen vorliegen, beispielsweise als Fasern oder als Granulat. Grundsätzlich werden schüttfähige Materialstrukturen im Silo gespeichert.

Diverse Ausführungsformen von Silos sind aus der Praxis bekannt, wobei ein Silo im Wesentlichen einen Behälter, eine Austragseinheit und einen Materialförderer aufweist.

Der Behälter umfasst einen Boden und mindestens eine Seitenwand, wobei dessen Grundfläche im Wesentlichen rund ist oder mehrere Seitenwände winkelig aneinanderstoßen. Verbreitet sind Behälter mit rechteckiger Grundfläche, beispielsweise bestehend aus einem Boden und vier Seitenwänden, wobei Boden und Seitenwände einen Füllraum begrenzen, der zur Aufnahme eines Materials dient.

Silos werden häufig als Zwischenspeicher verwendet, um Materialien bedarfsabhängig nachgelagerten Prozessen zuführen zu können, wie beispielsweise Verarbeitungs-, Herstellungs- oder Entsorgungsprozessen. Insbesondere für Prozesse, die eine kontinuierliche Materialversorgung erfordern, sind gleichbleibend homogene Austragsmengen von Bedeutung, um beispielsweise Prozessunterbrechungen vermeiden zu können. Eine kontinuierliche Materialdosierung erfolgt durch eine Austragseinheit.

Mittels Materialförderer mit Förderorganen bzw. Förderelementen im Füllraum, beispielsweise ein Schubboden, wird das Material zur Austragseinheit gefördert, um die Grundlage für eine kontinuierliche Materialdosierung zu schaffen. Ein Materialförderer kann insbesondere erforderlich sein, wenn in einem Silo Materialgemische gelagert werden. So können beispielsweise Materialgemische aus einer flüssigen und einer festen Phase gelagert werden, beispielsweise Gülle. Sofern die feste Phase dazu neigt, sich am Boden des Behälters abzusetzen, kann auch diese mittels Materialförderer zur Austragseinheit gefördert werden.

Im Füllraum bewirkt der Materialförderer einen gerichteten Materialstrom, so dass das Material gegen Bauteile des Silos gedrückt wird, was im Folgenden als Druckbelastung bezeichnet wird. Eine derartige mechanische Druckbelastung wirkt insbesondere auf die Austragseinheit und/oder auf eine Austragswand, wobei als Austragwand eine Seitenwand bzw. ein Abschnitt einer Seitenwand bezeichnet wird, die bzw. der nahe zur Austragseinheit angeordnet ist und überwiegend quer zum Materialstrom ausgerichtet ist.

Eine Druckbelastung ist umso höher, je stärker eine Austragskapazität der Austragseinheit von der im Füllraum zur Austragseinheit geförderten Materialmenge überschritten wird. Erfahrungen haben gezeigt, dass Silos durch hohe Druckbelastungen beschädigt werden können, insbesondere an der Austragseinheit bzw. an der Austragswand, wobei die Beschädigungen bis zu einem Versagen von Bauteilen führen können. Vereinzelt sind plastische Verformungen hinreichend, um die Funktionalität eines Silos nachhaltig zu beeinträchtigen.

Aus der Praxis bekannt ist, ein Drehmoment von einer rotierenden Auflösewalze, die der Austragseinheit zugeordnet ist, zu erfassen und bei Überschreitung eines Soll-Widerstands durch einen Ist-Widerstand die Materialförderung einzustellen. Auch ist eine Überwachung der Leistung einer Antriebseinheit bekannt, die rotationsbewegliche Bauteile bzw. Baugruppen einer Austragseinheit antreibt. Materialstrombedingte Beschädigungen bzw. Zerstörungen sind jedoch nicht auszuschließen, insbesondere bei niedrigen Materialfüllständen im Füllraum, wenn die Materialmenge beispielsweise von einer horizontal, oberhalb des Füllstandes gelagerten Auflösewalze nicht mehr erfassbar ist. Darüber hinaus ist eine ungleichmäßige Materialverteilung im Füllraum nicht ausreichend auflösbar, sodass bereits ein teilweises Materialaufstauen eine Verringerung der gesamten Materialförderung bedingen kann.

Der vorliegenden Erfindung liegt die Aufgabe zugrunde, die bekannten Silos dahingehend zu verbessern, dass betriebsbedingte Beschädigungen bzw. Zerstörungen verhindert werden, wobei es gilt, einen kontinuierlichen sowie homogen dosierten Materialaustrag sicherzustellen.

Gelöst wird die Aufgabe durch ein Silo nach den Merkmalen des Anspruchs 1, durch ein Verfahren nach den Merkmalen des Anspruchs 12 und durch eine vorschlagsgemäße Verwendung nach Anspruch 15. Vorteilhafte Ausgestaltungen sind in den Unteransprüchen beschrieben.

Die Erfindung schlägt mit anderen Worten vor, dass das Silo eine Druckerfassungseinheit aufweist, die inter alia aus einem oder mehreren Druckerfassungselementen besteht. Die Anordnung der Druckerfassungselemente erfolgt in der Art, dass eine auf die Austragseinheit und/oder auf eine Austragswand wirkende, materialstrombedingte Druckbelastung erfassbar ist. Vorschlagsgemäß kann die Druckbelastung unmittelbar gemessen werden oder eine Druckbelastung kann aus einer erfassten Verformung von Bauteilen abgeleitet werden, insbesondere aus einer Verformung der Austragswand. Weiterhin weist die Druckerfassungseinheit eine Ausgabeeinheit auf, die die materialstrombedingte Druckbelastung in eine Druckinformation umwandelt, die als Ausgangssignal auslesbar ist.

Die Austragseinheit weist stets eine Austragsöffnung und gegebenenfalls zusätzlich eine Austragsfördereinrichtung und/oder eine Auflöseeinrichtung auf. Die Austragsöffnung, beispielhaft ein Austragsschacht oder dergleichen, ist vorzugsweise im Boden bzw. im unteren Bereich einer Seitenwand angeordnet, sodass das Material prinzipiell schwerkraftunterstützt durch die Austragsöffnung aus dem Behälter austragbar ist, beispielsweise mittels Rieseln oder Fließen. Gegebenenfalls vorhandene Vibratoren beugen Verstopfungen vor und können den Materialaustrag verbessern. Grundsätzlich kann jedoch auch jede andere Öffnung die Austragsöffnung darstellen, beispielsweise eine fehlende Behälterdecke bzw. eine Aussparung in einem Behälterdeckel. Nach dem Austrag aus dem Silo kann das Material beispielsweise über ein Förderband, einen Kratzkettenförderer, eine Förderschnecke oder dergleichen weiter transportiert werden, beispielhaft zur weiteren Bearbeitung des Materials.

Da ein rein schwerkraftbedingter Austrag überwiegend nicht umsetzbar ist, beispielsweise bedingt dadurch, dass das Material dem Boden oder der Seitenwand des Behälters anhaftet, kann der Austragsöffnung vorteilhaft eine Austragsfördereinrichtung als der Teil der Austragseinheit zugeordnet sein, welche das Material durch die Austragsöffnung aus dem Füllraum befördert. Die Austragsfördereinrichtung kann beispielsweise als Austragsschnecke, Förderband, Förderschraube, als Austragsharke oder dergleichen verwirklicht sein, um das Material weitestgehend aus dem Silo auszutragen und dieses beispielsweise auf eine weitere Fördereinrichtung außerhalb des Behälters dosiert zu übertragen.

Eine Auflöseeinrichtung als Teil der Austragseinheit kann im Füllraum angeordnet sein, die dazu dient, inter alia den Materialaustrag zu optimieren, indem Auflöseelemente, beispielsweise Auflösewalzen, Auflöseschnecken, Dosierwalzen oder dergleichen, die vorzugsweise oberhalb der Austragsöffnung im Füllraum rotationsbeweglich gelagert sind, und das Material im Wesentlichen vereinzeln, wodurch die Materialzuführung zur Austragsöffnung und/oder zur Austragsfördereinrichtung verbessert wird.

Ein Materialförderer dient dazu, das Material im Füllraum zur Austragseinheit zu befördern, wobei insbesondere ein Förderorgan bzw. ein Förderelement des Materialförderers die Materialförderung bewirkt, beispielsweise die Förderklappen eines Schubbodens. Der Materialförderer bzw. das Förderorgan kann vorzugsweise im Füllraum angeordnet sein, wobei dieses im Wesentlichen auf einer Ebene mit der Austragsfördereinrichtung oder oberhalb der Austragsfördereinrichtung angeordnet sein kann, beispielsweise wenn eine Austragsschnecke als Austragsfördereinrichtung in einem U-förmigen Profilboden, als tieferliegender Teilbereich des Behälterbodens angeordnet ist. Beispielhaft kann als Materialförderer ein Schub- bzw. Schiebeboden oder dergleichen vorgesehen sein, bei dem Förderorgane bzw. Förderelemente beispielsweise auf hydraulisch angetriebenen Förderschienen vor und zurück bewegt werden, um das Material zu einer Austragseinheit zu fördern. Als Materialförderer können grundsätzlich Förderschnecken, Förderbänder, Plattenband, Abschiebewand, Kratzkette, Förderbalken oder dergleichen vorgesehen sein. Bedingt durch die Materialförderung wird ein Materialstrom ausgebildet zur Austragseinheit bzw. in Richtung zur Austragswand.

Vorschlagsgemäß wird die materialstrombedingte Druckbelastung, beispielsweise im Sinne einer Schub- bzw. Vorschubkraft, von einer Druckerfassungseinheit erfasst und druckabhängig ein Ausgangssignal erzeugt. Beispielsweise kann vorgesehen sein, dass die Druckerfassungseinheit ein akustisch wahrnehmbares Ausgangssignal erzeugt, das in Funktion eines Warnsignals Aufmerksamkeit erregt, insbesondere auf Seiten eines Benutzers des vorgeschlagenen Silos. Vorteilhaft kann das Warnsignal von der Druckerfassungseinheit ausgelöst werden, sobald eine Grenzbelastung überschritten wird, woraufhin ein Benutzer veranlasst wird, beispielsweise die Materialförderung im Füllraum zu regeln und zwar durch eine Verringerung bzw. ein Stoppen der Antriebsleistung des Materialförderers, um eine weitere Zunahme der Druckbelastung zu unterbinden. Ein Abbau der Druckbelastung erfolgt vorteilhafterweise durch die Austragseinheit, die das Material aus dem Füllraum austrägt und somit zu einem Abbau der Druckbelastung beiträgt. Ein zusätzlicher Druckbelastungsabbau kann dadurch erreicht werden, dass eine Umkehr der Antriebsleistung erfolgt, um beispielsweise einen rückwärts gerichteten Materialstrom im Füllraum zu bewirken.

Vorteilhaft ist, die Grenzbelastung als Schwellenwert in Abhängigkeit von einer maximalen, mechanischen Belastbarkeit der Austragseinheit und/oder der Austragswand festzulegen, um Beschädigungen oder ein Versagen ausschließen zu können. Aufgrund von gegebenenfalls vorhandenen Latenzzeiten, beispielsweise bedingt durch eine zeitverzögerte Wirkung einer Druckbelastung im Zuge der Materialförderung, ist eine Grenzbelastung vorteilhaft, die beispielsweise 10 % geringer ist als die maximale, mechanische Belastbarkeit der Austragseinheit und/oder der Austragswand. Das von der Druckerfassungseinheit erzeugte Ausgangssignal ist somit vorteilhaft verwendbar zur Verwirklichung einer entsprechenden Reaktionszeit, um druckbedingte Beschädigungen an der Austragseinheit bzw. an der Austragswand verhindern zu können. Die Reaktionszeit ist umso länger, je niedriger die ein Warnsignal auslösende Grenzbelastung ist, welche grundsätzlich von einem Benutzer festlegbar ist.

Weiterhin können die Druckinformationen vorteilhafterweise dazu verwendet werden, um einen Materialfüllstand im Silo erfassen zu können. Bei Unterschreiten einer bestimmten Druckbelastung kann ein Warnsignal bzw. ein Hinweis an einen Benutzer ausgelöst werden, um darauf aufmerksam zu machen, dass ein Nachfüllen des Silos mit dem zu speichernden Material erforderlich sein kann.

Vorteilhafterweise kann vorgesehen sein, dass das Ausgangssignal ein Steuerungssignal ist, welches in einer Steuerungseinheit verarbeitbar ist. Insbesondere die Steuerungseinheit und das Steuerungssignal bilden zusammen ein Steuerungssystem. Die Druckerfassungseinheit kann ein kontinuierliches Steuerungssignal erzeugen oder in diskreter Weise Informationen hinsichtlich einer Druckbelastung an die Steuerungseinheit übermitteln.

Vorgesehen sein kann, dass, ausgehend von dem Steuerungssignal, durch die Steuerungseinheit direkt oder indirekt die Antriebsleistung des Materialförderers regelbar ist und somit der Vorschub des Materialstroms im Füllraum des Behälters. Vorliegend entspricht eine hohe Antriebsleistung einer hohen Vorschubgeschwindigkeit des Materials. Für die Regelung kann vorteilhafterweise vorgesehen sein, dass die Antriebsleistung steigerbar ist, wenn eine von der Druckerfassungseinheit erfasste, momentane Ist-Druckbelastung eine Grenzbelastung unterschreitet und die Antriebsleistung verringerbar, stoppbar oder umkehrbar ist, wenn eine Grenzbelastung von einer momentanen Ist-Druckbelastung überschritten wird.

Somit können Beschädigungen an der Austragseinheit bzw. an der Austragswand verhindert werden, und zwar auch ohne, dass ein manuelles Eingreifen seitens eines Benutzers unbedingt erforderlich ist, infolgedessen Personalkosten verringert und ein Sicherheitsrisiko durch Bedienungsfehler minimiert werden können.

Eine im Füllraum temporär geförderte Materialmenge, die größer ist als die von der Austragseinheit austragbare Materialmenge, beispielsweise im Falle von Verstopfungen der Austragsöffnung, steigert zum einen die Druckbelastungen. Zum anderen kann eine Komprimierung und Verfestigung des Materials im Füllraum bei fortschreitender Förderung die Folge sein, wodurch die Materialzuführung zur Austragseinheit gestört und ein kontinuierlicher und homogener Materialaustrag erschwert bzw. unterbrochen wird. Ein Steuerungssystem, welches die Antriebsleistung regelt, kann daher zudem vorteilhaft sein, um einen kontinuierlichen und homogenen Materialstrom und infolgedessen einen dosierten Materialaustrag sicherstellen zu können, indem eine bedarfsangepasste Regelung erfolgt, beispielhaft derart, dass der Vorschub des Materialstroms regelungstechnisch permanent einem Optimum angenähert wird.

Für einen optimierten Vorschub des Materialstroms kann insbesondere in einer Ausgestaltung vorgesehen sein, dass neben einer Grenzbelastung vorteilhafterweise in der Steuerungseinheit weitere Schwellenwerte hinterlegt sind, die unterschiedlichen Druckbelastungen zuordnenbar sind. Dafür sind beispielsweise ein oder mehrere Schwellenwerte vorteilhaft, die zur Grenzbelastung relativ niedriger sind, um beispielhaft bei Überschreitung eines Schwellenwertes zunächst eine Verringerung der Vorschubgeschwindigkeit des Materialstroms auslösen zu können, bevor der Materialstrom beim Erreichen bzw. Überschreiten der Grenzbelastung gestoppt wird. Analog ist die Vorschubgeschwindigkeit sukzessive steigerbar, wenn eine von der Druckerfassungseinheit erfasste Druckbelastung die Grenzbelastung bzw. die weiteren Schwellenwerte unterschreitet. Eine Steuerungseinheit, die Informationen aus einem Steuerungssignal verarbeitet und die die Antriebsleistung des Materialförderers entsprechend regelt, kann insbesondere vorteilhaft sein, um Latenzzeiten bzw. die Trägheit des Systems, bestehend aus Silo und gefördertem Material, berücksichtigen zu können, sodass die Kontinuität sowie die Homogenität des Materialstroms und damit die Verlässlichkeit eines dosierten Austrags des zwischengespeicherten Materials steigerbar ist.

Vorteilhaft kann das Steuerungssystem eine an den Benutzer des Silos gerichtete Informationsübertragung auslösen, beispielsweise durch Übermittlung einer elektronischen Nachricht auf ein mobiles Endgerät, wenn die von der Druckerfassungseinheit erfasste Ist-Druckbelastung einem Schwellenwert bzw. der Grenzbelastung entspricht bzw. die erfasste Ist-Druckbelastung einen Schwellenwert bzw. die Grenzbelastung über- oder unterschreitet. Somit kann der Benutzer eines Silos bereits frühzeitig einen potentiellen Handlungsbedarf erkennen und kann entsprechend reagieren, um sowohl Beschädigungen oder dergleichen verhindern zu können, als auch auf einen optimierten Materialaustrag hinwirken zu können.

Für eine Ausgestaltung der Erfindung kann eine Austragseinheit mit einem rotationsbeweglich gelagerten Austragselement vorgesehen sein, wobei das Austragselement im Behälter angeordnet ist. Das Austragselement kann eine Austragsfördereinrichtung sein, beispielhaft eine Austragsschnecke oder Austragsschraube, die vorteilhaft im Wesentlichen auf einer Ebene mit dem Förderorgan des Materialförderers quer zum Materialstrom im Füllraum angeordnet ist. Druckerfassungselemente, beispielsweise als Dehnungsmesstreifen oder Kraftmessdosen, können vorgesehen sein, um eine auf die Lagerung bzw. auf die Lagerpunkte der Austragsfördereinrichtung wirkende Druckbelastung erfassbar zu machen. Insbesondere sind auf diese Weise dann noch Druckbelastungen feststellbar, wenn im Füllraum ein geringer Füllstand vorliegt, beispielsweise, wenn nur geringe Materialmengen zwischengespeichert werden oder ein Großteil der zwischengespeicherten Materialmenge bereits ausgetragen wurde. Gleichzeitig ist vorteilhafterweise der Materialfüllstand im Silo ermittelbar.

Als rotationsbeweglich gelagertes Austragselement kann für eine Ausgestaltung eine Auflöseeinrichtung vorgesehen sein, beispielsweise wenigstens eine Auflösewalze, Auflöseschnecke, Dosierwalze oder dergleichen. Die Auflöseeinrichtung kann im Behälter lagernd im Wesentlichen quer zum Materialstrom angeordnet sein, wobei Druckerfassungselemente, beispielsweise als Dehnmesstreifen oder Kraftmessdosen, vorgesehen sein können, die eine auf die Lagerung bzw. auf die Lagerpunkte der Auflöseeinrichtung wirkende Druckbelastung erfassen können.

Vorteilhaft kann die Lagerung der Auflöseeinrichtung höhenverstellbar sein über die Höhe des Behälters. Die Höheneinstellung kann manuell oder automatisch erfolgen und dient dazu, die Austragsmenge des Materials zu regulieren, insbesondere dann, wenn im Behälter keine zusätzliche Austragsfördereinrichtung angeordnet ist, und der Materialförderer das Material beispielsweise in Richtung eines Austragsschachtes fördert. Vorteilhafterweise rotiert die Auflöseeinrichtung in der Art, dass die Auflöseeinrichtung materialförderernah gegen den Materialstrom wirkt, um eine bessere Dosierung des auszutragenden Materials erzielen zu können.

In einer Ausgestaltung kann vorgesehen sein, dass die Antriebskraft bzw. die notwendige Leistung von Antriebsmotoren, ein Drehmoment oder dergleichen, eines rotationsbeweglichen Austragselements der Austragseinheit überwacht werden, um bei Vorliegen entsprechender Werte, den Materialförderer und/oder die Drehzahl eines Austragselements regeln zu können.

Die von den Druckerfassungselementen ermittelten Druckinformationen können von der Druckerfassungseinheit bzw. durch das Steuerungssystem verarbeitet werden, dahingehend, dass bei vorliegender Grenzbelastung bzw. vorliegendem Schwellenwert als Ist-Druckbelastung beispielsweise ein Warnsignal erzeugt oder unmittelbar eine Regelung des Materialförderers und/oder eines Austragselements erfolgt.

Vorteilhafterweise kann die Austragseinheit eine Auflöseeinrichtung aufweisen mit ein oder mehreren Auflöseelementen, beispielsweise rotationsbeweglich gelagerte Auflösewalzen, Auflöseschnecken, Dosierwalzen oder dergleichen, die im Füllraum oberhalb der Austragsfördereinrichtung angeordnet sind. Mittels vorgesehener Druckerfassungselemente ist die auf eine Lagerung eines Auflöseelements wirkende Druckbelastung erfassbar, sodass beispielsweise im Falle höherer Füllstände eine Beschädigung oder eine Verdichtung des Materials verhinderbar ist.

Ein oder mehrere Druckerfassungselemente, die der Lagerung bzw. den Lagerpunkten sowohl der Austragsfördereinrichtung als auch der Auflöseeinrichtung zugeordnet sind, können vorteilhaft sein, um eine vorliegende Druckbelastungssituation flächenbezogen aufzulösen, und zwar über einen im Wesentlichen vertikalen Querschnitt parallel zur Austragswand. Eine flächenbezogene Auflösung der Druckverhältnisse ist vorteilhaft, um beispielsweise unterschiedliche Lagerungsverhältnisse des Materials, beispielsweise Bereiche mit höheren Schüttdichten bzw. mit einer höheren Materialkomprimierung, erkennen und die Vorschubgeschwindigkeit des Materialförderers entsprechend regeln zu können. Mit zunehmender Anzahl von Auflöseelementen, deren Lagerpunkten Druckerfassungselemente zugeordnet sind, ist die darstellbare Auflösung einer Belastungssituation steigerbar.

Insbesondere für eine Ausgestaltung, die keine Auflöseeinrichtung aufweist, kann vorgesehen sein, dass die Austragswand Druckerfassungselemente aufweist, wobei insbesondere ein oder mehrere Wägezellen und/oder Kraftaufnehmer vorteilhaft sein können. Die Druckerfassungselemente können im Füllraum an der Austragswand, die den Materialstrom im Wesentlichen begrenzt, angeordnet sein, um die materialstrombedingten Druckkräfte unmittelbar zu erfassen, wobei insbesondere auch sehr geringe Druckbelastungen detektierbar sind. Grundsätzlich kann es bei einer Anordnung im Füllraum ausreichend sein, nur Druck- jedoch keine Zugkräfte zu erfassen, sodass für eine kostensparende Ausgestaltung eine einfache Wägezelle vorgesehen sein kann.

Vorteilhafterweise kann vorgesehen sein, insbesondere außerhalb des Füllraums ein oder mehrere Wägezellen, Kraftaufnehmer, Kontakt- oder Positionsschalter, Dehnungsmessstreifen oder dergleichen an der Austragswand anzuordnen, beispielsweise in der Art, dass eine Verformung der Austragswand erfassbar ist, wobei die Verformung durch den gegen die Austragswand drückenden Materialstrom hervorgerufen wird.

Für eine Ausgestaltung kann vorteilhaft sein, Druckerfassungselemente, wie beispielsweise Kraftaufnehmer, kraftübertragungswirksam zur Austragswand außerhalb des Füllraums anzuordnen. Dazu kann beispielsweise vorgesehen sein, einen Kraftaufnehmer mit einem vorgespannten Bauteil, vorzugsweise mit einem Zugseil, zu verbinden, wobei der Kraftaufnehmer oder das Zugseil unmittelbar mit der Austragswand verbunden sind. Eine materialstrombedingte Druckbelastung und eine damit einhergehende Verformung haben dabei eine abnehmende Zugspannung des Zugseils zur Folge, die von einem Kraftaufnehmer erfassbar ist, wobei im einfachsten Fall eine vorgespannte Feder mit entsprechend elektrischer Kontaktierung ein druckabhängiges Ausgangssignal initiieren kann.

Für eine Ausgestaltung kann vorgesehen sein, dass die Druckerfassungselemente außerhalb des Füllraums (un-)mittelbar zwischen der Austragswand und einem Widerlager angeordnet sind, beispielsweise Wägezellen, Kraftaufnehmer, Kontakt- oder Positionsschalter, oder dergleichen, sodass eine materialstrombedingte Verformung der Austragswand von einem derartigen Druckerfassungselement als Druckbelastung erfasst wird.

Eine Anordnung der Druckerfassungselemente außerhalb des Füllraums ist vorteilhaft, um erstens die Druckerfassungselemente vor abrasiven und korrosiven Einwirkungen durch die geförderten Materialien zu schützen. Zweitens können die Druckerfassungselemente vor Schmutz, Feuchtigkeit oder dergleichen sehr leicht geschützt werden, beispielsweise mittels mechanischer Abschirmung oder Einhausung. Drittens können die Druckerfassungselemente auf einfache Weise gewartet werden aufgrund einer besseren Zugänglichkeit. Zudem können bereits bekannte Silos ohne vorschlagsgemäße Druckererfassung grundsätzlich auf unkomplizierte Weise nachgerüstet werden.

Die Druckerfassungselemente erfassen eine Druckinformation, die von der Druckerfassungseinheit bzw. durch das Steuerungssystem verarbeitet wird. Vorzugsweise wird bei vorliegender Grenzbelastung bzw. vorliegendem Schwellenwert als Ist-Druckbelastung beispielsweise ein Warnsignal erzeugt oder es erfolgt eine unmittelbare Regelung des Materialförderers.

Vorteilhaft kann die Austragswand eine Revisionsklappe aufweisen, wobei vorgesehen sein kann, dass die Austragswand als Ganzes als Revisionsklappe öffnenbar ist oder nur ein Teilbereich der Austragswand eine Revisionsklappe aufweist. Die Revisionsklappe kann wahlweise öffnenbar sein aus einer geschlossenen Betriebsstellung in eine geöffnete Revisionsstellung, wobei in geöffneter Stellung ein in der Austragwand befindlicher Durchlass zum Füllraum freigegeben wird. Vorzugsweise kann vorgesehen sein, dass die Revisionsklappe im Wesentlichen parallel zum Behälterboden um eine Drehachse schwenkbeweglich angeordnet ist, wobei die Revisionsklappe nach außen und nicht in den Füllraum hinein öffnenbar ist. Eine Revisionsklappe ist vorteilhaft, um Fremdkörper aus dem Füllraum entfernen zu können bzw. um den Füllraum zu Revisionszwecken auf einfache Weise säubern zu können. Auf ein direktes Begehen des Silos bzw. auf ein Eintreten in das Silo kann durch die Revisionsklappe verzichtet werden, sodass die Betriebssicherheit steigerbar ist durch eine verringerte Wahrscheinlichkeit für Unfälle. Zudem können mittels Revisionsklappe Störungen in der Austragseinheit, wie beispielsweise Verstopfungen, auf einfache Weise und schnell behoben werden.

Insbesondere für eine großdimensionierte Revisionsklappe kann vorgesehen sein, dass ein Wechsel der Klappenstellung, beispielsweise beim Öffnen beziehungsweise Schließen der Revisionsklappe, kraftunterstützt erfolgt, indem ein oder mehrere Arbeitszylinder an die Revisionsklappe anschließen. Arbeitszylinder verbessern eine ergonomische Handhabung und tragen dazu bei, die Betriebssicherheit zu erhöhen. Als Arbeitszylinder können Hydraulikzylinder vorteilhaft sein, wobei insbesondere vorgesehen sein kann, dass wenigstens ein Arbeitszylinder ein Druckerfassungselement aufweist, sodass eine auf die Austragswand bzw. eine auf die Revisionsklappe wirkende, materialstrombedingte Druckbelastung erfassbar ist. Infolgedessen sind die mit der Druckerfassungseinheit einhergehenden Vorteile mit den Vorzügen einer Revisionsklappe kombinierbar.

Im einfachsten Fall kann vorgesehen sein, dass die Revisionsklappe bei Überschreitung einer Grenzbelastung geöffnet wird, wobei die materialstrombedingte Druckbelastung unmittelbar das Öffnen bewirken kann, sodass sich die Revisionsklappe öffnet und druckbelastende Kräfte abgebaut werden, indem gefördertes Material durch den Durchlass aus dem Füllraum austritt, bevor Beschädigungen auftreten können. Eine Ausgabeeinheit kann beispielsweise einen Warnton erzeugen oder über das Steuerungssystem kann eine Regelung des Materialförderers erfolgen, um den Materialstrom zu verlangsamen bzw. zu stoppen. Vorteilhafterweise wird die Materialförderung im Füllraum erst nach Abbau der Druckbelastung wieder intensiviert, beispielsweise nachdem die Austragseinheit aufgestautes Material aus dem Füllraum ausgetragen und somit zum Abbau der Druckbelastung beigetragen hat.

Vorteilhaftweise kann die Revisionsklappe ein oder mehrere Druckerfassungselemente aufweisen, wobei diese im Füllraum bzw. außerhalb des Füllraums angeordnet sein können, was grundsätzlich mit den bereits zuvor beschriebenen Vorteilen verbunden ist. Die Öffnenbarkeit der Revisionsklappe bietet den Vorteil, dass im Füllraum angeordnete Druckerfassungselemente auf einfache Weise gewartet werden können. Zudem kann ein druckabhängiges Öffnen der Revisionsklappe einen Überlastungsschutz für die Druckerfassungselemente darstellen, insbesondere im Fall längerer Latenzzeiten, wenn bei Erreichen eines Schwellenwertes oder bei Überschreitung einer Grenzbelastung eine wirkende Druckbelastung nicht unmittelbar verringert werden kann.

Eine Erfassung der Druckbelastung kann über eine Verformungsmessung der Austragswand erfolgen. Materialstrombedingte Verformungen der Austragswand können vorteilhaft optisch erfasst werden. Dazu kann vorgesehen sein, dass eine Kamera angeordnet ist, deren optischer Erfassungsbereich im Wesentlichen auf die Austragswand ausgereichtet ist. Als Grenzbelastung bzw. Schwellenwerte sind in der Druckerfassungseinheit bzw. in der Steuerungseinheit unterschiedliche Verformungszustände der Austragwand hinterlegt, die jeweils einer bestimmten Druckbelastung zuordnenbar sind. Wird bei einer andauernden Materialförderung ein Verformungszustand der Austragswand erreicht, der einem Schwellenwert bzw. einer Grenzbelastung entspricht, kann dieser vorteilhaft von der Kamera erfasst werden, woraufhin ein Ausgangssignal erzeugt wird, welches entweder Ausgangpunkt für eine manuelle Veranlassung ist, beispielsweise im Falle eines akustischen Warnsignals, oder ein Steuerungssignal ist zur Regelung der Antriebsleistung des Materialförderers.

Zur Ermittlung einer Austragswandverformung kann vorgesehen sein, eine Lasereinheit anzuordnen, in der Art, dass ein oder mehrere Laserstrahlen auf die Austragswand ausgerichtet sind. Mit zunehmender Verformung wird die Reflektion eines Laserstrahls beeinflusst. Schwellenwerte bzw. eine Grenzbelastung können somit mit einer definierten Abweichung eines Laserstrahls korreliert werden zur Ausgabe eines Ausgangs- bzw. Steuerungssignals für eine nachfolgende Veranlassung zur Antriebsteuerung.

In einer Ausgestaltung kann vorgesehen sein, den Laser an der Austragswand anzuordnen und den Laserstrahl auf ein anderes Bauteil auszurichten und bei Verformung der Austragswand eine abweichende Strahlrichtung eines Laserstrahls zu erfassen, wobei die abweichende Strahlrichtung den Ausgangspunkt für ein Ausgangs- bzw. Steuerungssignals darstellt, beispielhaft für eine nachfolgende Veranlassung zur Antriebsteuerung.

Ein kontinuierlicher und homogen dosierter Materialaustrag ist für die Prozesssicherheit nachgelagerter Prozesse von großer Bedeutung. Insbesondere in großen Füllraumvolumina können inter alia große Schwankungen in den Lagerungsverhältnissen des Materials auftreten, beispielsweise in der Form, dass Teilbereiche innerhalb des Materials mit höheren Schüttdichten bzw. mit einer höheren Materialkomprimierung vorliegen können. Insbesondere diese Teilbereiche können einen kontinuierlichen und homogen dosierten Materialaustrag stören, indem bereits eine lokal wirkende Druckbelastung eine Verringerung bzw. ein Stoppen des Materialförderers im Füllraum bewirken kann, ohne dass noch ausreichend Material für die Austragseinheit austragbar ist.

Daher kann vorteilhaft vorgesehen sein, dass der Materialförderer, beispielsweise ein Schubboden, mehrzeilig aufgebaut ist, in der Art, dass Förderelemente nebeneinander angeordnet sind, beispielsweise als Förderschienen eines Schubbodens, die separat regelbar sind.

Insbesondere kann vorteilhafterweise vorgesehen sein, dass der Füllraum im Behälter in Förderzonen bzw. Teilvolumina eingeteilt ist, wobei die Förderzonen im Wesentlichen nebeneinander angeordnet sind. Eine konstruktive Trennung des Füllraums in Förderzonen, beispielsweise durch Anordnung ein oder mehrerer, aufrechter Trennwände im Füllraum, ist vorzugsweise für Ausnahmefälle vorgesehen. Vorgesehen sein kann, dass einer Förderzone ein Förderelement und eine Druckerfassungseinheit zugeordnet ist, wobei insbesondere vorteilhaft ist, dass jeder Förderzone jeweils wenigstens ein Förderelement und eine Druckerfassungseinheit zugeordnet ist.

Separate Förderzonen mit entsprechend angeordnetem Förderelement und angeordneter Druckerfassungseinheit sind vorteilhaft, um die Ortsauflösung der Lagerungsverhältnisse des Materials im Füllraum zu erhöhen und Druckbelastungen lokal erfassbar zu machen, sodass eine an die Druckverhältnisse angepasste, zonenbezogene Materialförderung erfolgen kann. Vorteilhaft ist, dass dafür die Erfassung der Druckbelastung im unteren Bereich der Austragswand erfolgen kann, um auch bei geringen Füllständen eine Druckbelastungen erfassen zu können. Eine zusätzliche Steigerung der Ortsauflösung kann erfolgen, indem mehrere Druckerfassungseinheiten im Wesentlichen vertikal übereinander, vorzugsweise verteilt über die Höhe des Behälters, an der Austragswand bzw. an der gegebenenfalls angeordneten Revisionsklappe angeordnet sind.

Ausgehend von einer förderzonenbezogenen Erfassung der Druckbelastung kann die Materialförderung in einer Förderzone verringert bzw. ausgesetzt werden, wenn eine erfasste Druckbelastung einen Schwellenwert bzw. eine Grenzbelastung erreicht. Währenddessen kann die Materialförderung in der oder den weiteren Förderzonen beispielsweise unverändert fortgesetzt oder gegebenenfalls erhöht werden, um weiterhin einen kontinuierlichen und homogen dosierten Materialaustrag sicherstellen zu können. Die Regelung der Förderzonen kann dabei manuell durch einen Benutzer erfolgen bzw. unmittelbar automatisiert durch das Steuerungssystem. Für die einer Förderzone zugeordnete Druckerfassungseinheit können alle zuvor beschriebenen Ausgestaltungen vorgesehen sein.

Ferner betrifft die Erfindung ein Verfahren zur Regelung einer Materialförderung. Für ein Silo mit einem Behälter und mit einem im Behälter wirksamen Materialförderer wird vorgeschlagen, dass eine auf Bauteile bzw. Baugruppen des Silos wirkende und durch die Materialförderung im Behälter hervorgerufene Druckbelastung erfasst wird und die Materialförderung druckabhängig geregelt wird.

Vorgesehen ist, die Materialförderung zu steigern, vorzugsweise in der Art, dass die Vorschubgeschwindigkeit eines Materialstroms im Behälter gesteigert wird, wenn die Druckerfassungseinheit im Sinne einer Ist-Druckbelastung eine Druckbelastung erfasst, die einen festgelegten Grenzwert unterschreitet. Als Grenzwert wird vorteilhafterweise ein Schwellenwert festgelegt, der durch die maximale, mechanische Belastbarkeit von Bauteilen bzw. Baugruppen des Silos definiert wird. Einerseits trägt eine Steigerung der Materialförderung unterhalb des Grenzwertes dazu bei, den Materialstrom zu optimieren, sodass ein kontinuierlicher und homogen dosierter Materialaustrag sicherstellbar ist. Anderseits kann vorgesehen sein, die Materialförderung zu verringern oder zu stoppen, wenn ein Grenzwert überschritten wird, sodass eine betriebsbedingte Beschädigung bzw. Zerstörung des Silos verhinderbar ist. Es können ein oder mehrere Grenzwerte vorgesehen sein, um die Materialförderung, vorzugsweise automatisiert, einem Optimum annähern zu können.

Vorteilhafterweise kann vorgesehen sein, eine Druckbelastung zu erfassen und daraus ableitend ein Ausgangssignal zu erzeugen. Das Ausgangssignal kann als Steuerungssignal zu einer Steuerungseinheit geleitet werden, die die Druckinformationen abgleicht mit hinterlegten Schwellenwerten und Grenzbelastungen. Bei Abweichungen zwischen erfassten Ist- und hinterlegten Schwellen- bzw. Grenzwerten regelt die Steuerungseinheit die Materialförderung im Behälter, beispielsweise indem die Antriebsleistung des Materialförderers verringert oder gestoppt wird, um betriebsbedingte Beschädigungen oder Zerstörungen des Silos verhindern zu können. Die Regelung der Antriebsleistung kann vorteilhaft dazu genutzt werden, um einen Vorschub des Materialstroms im Behälter des Silos zu beschleunigen bzw. zu verringern.

Vorteilhaft kann vorgesehen sein, eine materialstrombedingte Druckbelastung zu erfassen, die auf eine Austragseinheit bzw. auf eine Austragswand wirkt. Austragseinheit und/oder Austragswand sind grundsätzlich unmittelbar dem Materialstrom ausgesetzt, sodass diese Bauteile bzw. Baugruppen eines Silos während des Betriebs des Silos stark druckbelastet werden können. Die Erfassung einer an der Austragseinheit und/oder Austragswand wirkenden Druckbelastung kann die Standzeit des Silos verlängern, indem der Materialstrom angepasst wird bevor Beschädigungen oder Zerstörungen auftreten.

Vorgesehen sein kann, dass ein Füllraum, welcher im Behälter zur Aufnahme des schüttfähigen Materials dient, mehrere Förderzonen aufweist mit jeweils wenigstens einem individuell regelbaren Förderelement eines Materialförderers. Vorteilhafterweise kann eine Steuerungseinheit Druckinformationen aus einer oder mehreren Förderzonen verarbeiten und die Materialförderung zonenabhängig regeln, wobei sichergestellt wird, dass ein Materialaustrag insgesamt kontinuierlich und homogen dosiert erfolgt.

Die Steuerungseinheit kann vorteilhaft mit weiteren Steuerungseinheiten signalübertragungswirksam verbunden sein, sodass beispielsweise ein Ereignis in einem dem Materialaustrag nachgelagerten Prozess eine Regelung der Materialförderung im Füllraum auslöst. Beispielsweise kann vorgesehen sein, dass die Materialförderung im Füllraum verringert oder gestoppt wird, wenn eine Störung in einem nachgelagerten Prozess signalisiert wird. Wird stattdessen ein gesteigerter Materialbedarf signalisiert, kann vorteilhaft eine Regelung des Materialförderers erfolgen, in der Art, dass die Materialförderung im Behälter gesteigert wird.

Insbesondere vorteilhaft kann sein, dass der Materialförderer und/oder die Austragseinheit, beispielhaft eine Austragsfördereinrichtung und/oder eine Auflöseeinrichtung, regelbar ist, vorzugsweise über eine gemeinsame Steuerungseinheit, die die Materialförderung druckabhängig und den Materialaustrag bedarfsabhängig aufeinander abstimmt. Auf diese Weise kann individuell auf situative Veränderungen reagiert werden, für die Ereignisse im Silo ursächlich sind und/oder die auf Ereignisse aus einem nachgelagerten Prozess zurückzuführen sind.

Vorschlagsgemäß ist vorgesehen, eine Druckerfassungseinheit bei einem Silo zu verwenden, besonders vorteilhaft bei einem Silo nach einem der Ansprüche 1 bis 11, und vorteilhaftweise zur Umsetzung des vorschlagsgemäßen Verfahrens nach einem der Ansprüche 12 bis 14.

Die vorgeschlagene Erfindung wird anhand rein schematischer Ausführungsbeispiele näher erläutert. Dabei zeigen
- Fig. 1: eine perspektivische Ansicht schräg von oben auf einen Silo mit Austragsschnecke und Auflösewalze,
- Fig. 2: eine perspektivische Ansicht schräg von oben auf einen Teilbereich eines Silos mit tieferliegender Austragsschnecke, die in einem U-förmigen Profilboden angeordnet ist,
- Fig. 3: eine perspektivische Ansicht schräg von oben auf einen Teilbereich eines Silos mit geöffneter Revisionsklappe, und
- Fig. 4: eine Seitenansicht des Silos aus Fig. 3 im Querschnitt entlang der Schnittlinie A-A aus Fig. 3.

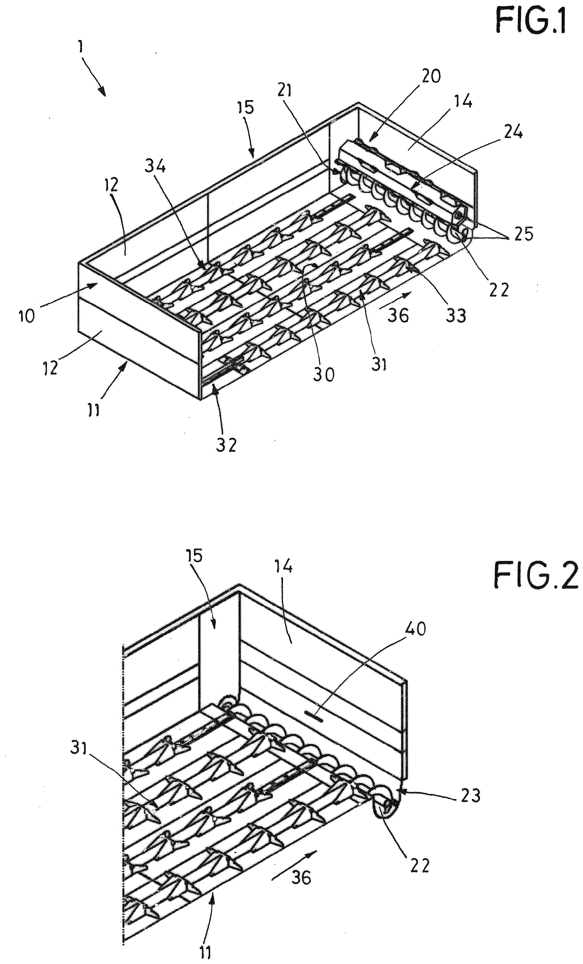

Fig.1 zeigt eine perspektivische Ansicht eines ersten Ausführungsbeispiels eines Silos 1 mit einem quaderförmigen Behälter 10, der aus einem Boden 11, und vier Seitenwänden 12 zusammengesetzt ist, wobei in der Zeichnung die vordere, längsseitige Wand zur besseren Darstellbarkeit nicht eingezeichnet ist. Boden 11 und Seitenwände 12 begrenzen einen Füllraum 15. Eine stirnseitige Wand bildet die Austragswand 14. Im Füllraum 15 angeordnet ist eine Austragseinheit 20 mit einer Austragsöffnung 21, einer Austragsschnecke 22 sowie einer Auflösewalze 24. Die Austragsöffnung 21 befindet sich in einer längsseitigen Wand und die Austragsschnecke 22 ist bodennah, parallel zur Austragswand 14 durch die Austragsöffnung 21 fördernd angeordnet. Oberhalb der Austragschnecke 22 ist die Auflösewalze 24 angeordnet, die über zwei Lagerpunkte 25 in den längsseitigen Wänden gehalten wird. Als Materialförderer 30 ist im Füllraum 15 ein Schubboden angeordnet, dessen hydraulisch angetriebene Förderelemente 31 auf vier separaten Förderschienen 32 geführt sind.

Mittels Schubboden wird im Füllraum 15 befindliches Material zur Austragseinheit 20 gefördert unter Ausbildung eines Materialstroms 36. In Förderbewegung 33 weisen die Förderelemente eine breite Schubfläche auf, wohingegen die Schubfläche der Förderelemente in Rückzugsbewegung 34 verringert ist. Die Auflösewalze 24 dient inter alia dazu, das geförderte Material zu vereinzeln und der Austragschnecke 22 zuzuführen. Über die Austragsschnecke 22 wird das Material durch die Austragsöffnung 21 aus dem Füllraum 15 ausgetragen.

Zur Erfassung einer materialstrombedingten Druckbelastung, die auf die Austragseinheit 20 einwirken kann, sind den Lagerpunkten 25 der Austragsschnecke 22 und den Lagerpunkten 25 der Auflösewalze 24 Druckerfassungselemente 41 zugeordnet, die signalübertragungswirksam mit einer Ausgabeeinheit verbunden sind. In der Ausgabeeinheit sind Belastungsdaten hinterlegt, die eine Grenzbelastung definieren. Wird die Grenzbelastung durch eine materialstrombedingte Ist-Druckbelastung erreicht, erzeugt die Ausgabeeinheit einen Warnhinweis, der einem Benutzer des Silos 1 auf ein mobiles Endgerät übermittelt wird. Der Benutzer wird nunmehr in die Lage versetzt, die Materialförderung im Füllraum 15 manuell zu verlangsamen bzw. zu stoppen, damit insbesondere die Austragseinheit 20 nicht durch eine materialstrombedingte Druckbelastung beschädigt wird.

Eine perspektivische Ansicht eines weiteren Ausführungsbeispiels eines Silos 1 ist in Fig. 2 zu sehen, wobei vorliegend ein Teilbereich fokussiert dargestellt wird. Im Gegensatz zur Darstellung des Silos 1 aus Fig. 1, ist die Austragsschnecke 22 nunmehr tieferliegend in einem U-förmigen Profilboden 23 angeordnet und eine Auflösungswalze 24 ist nicht vorhanden.

Im Füllraum 15 an der Austragswand 14 ist eine Druckerfassungseinheit 40 angeordnet zur Erfassung einer materialstrombedingten Druckbelastung und zur Ausgabe eines Steuerungssignals. Die Druckerfassungseinheit 40 ist signalübertragungswirksam verbunden mit einer Steuerungseinheit, die in Fig. 2 nicht sichtbar außerhalb des Füllraums 15 unterhalb des Bodens 11 montiert ist. Signalabhängig reguliert die Steuerungseinheit die Antriebsleistung der Förderelemente 31 des Schubbodens, derart, dass der Vorschub des Materialstroms 36 gesteigert wird, sobald Schwellenwerte bzw. die Grenzbelastung von einer Ist-Druckbelastung unterschritten werden. Hingegen wird der Vorschub verlangsamt, wenn Schwellenwerte überschritten werden, und schließlich gestoppt, wenn die Grenzbelastung von einer erfassten Ist-Druckbelastung überschritten wird. In der Steuerungseinheit sind mehrere Schwellenwerte hinterlegt, die unterschiedlichen Druckbelastungen zuordnenbar sind, sodass eine mehrfach abgestufte Regelung den Materialaustrag optimiert.

Zusätzlich wird einem Benutzer ein Hinweis auf eine vorliegende Belastungssituation sowie über die entsprechend geänderte Antriebsregelung auf ein mobiles Endgerät übermittelt, wobei grundsätzlich einstellbar ist, ob über jede automatische Regelung oder nur über das Erreichen einer Grenzbelastung informiert werden soll. Durch die Hinweisfunktion erhält ein Benutzer die Möglichkeit, gegebenenfalls korrigierend in die automatische Regelung eingreifen zu können. Eine manuelle Nach-Regelung erfolgt entweder unmittelbar am Silo 1 oder über das mobile Endgerät mit entsprechender Software.

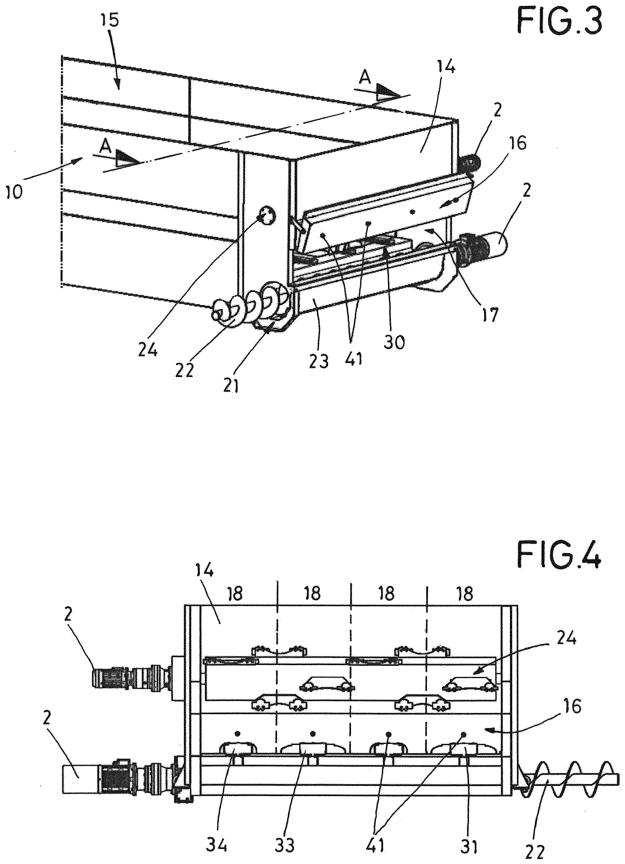

Fig. 3 zeigt eine perspektive Ansicht eines weiteren Ausführungsbeispiels eines Silos 1, wobei wiederrum ein Teilbereich im Fokus liegt. Vergleichbar wie bereits in Fig. 1 und Fig. 2, ist ein Silo 1 mit einem quaderförmigen Behälter 10, einer Austragseinheit 20 und einem Materialförderer 30 dargestellt. Die Austragsöffnung 21 ist in einer längsseitigen Wand angeordnet, durch die eine Austragsschnecke 22 das Material aus dem Füllraum 15 austrägt. Die Austragsschnecke 22 ist in einem U-förmigen Profilboden 23 unterhalb des Schubbodens eingesetzt und oberhalb der Austragsschnecke 22 ist eine Auflösewalze 24 parallel zur Austragswand 14 in den längsseitigen Wänden gelagert. Austragsschnecke 22 und Auflösewalze 24 werden über Elektromotoren 2 angetrieben.

Ein Teilbereich der Austragswand 14 oberhalb der Austragsschnecke 22 und unterhalb der Auflösewalze 24 ist als Revisionsklappe 16 ausgestaltet, die wahlweise öffnenbar ist aus einer geschlossenen Betriebsstellung in eine einen Durchlass 17 in den Füllraum 15 freigebenden Revisionsstellung. Die in Fig. 3 in Revisionsstellung dargestellte, geöffnete Revisionsklappe 16 weist vier Druckerfassungselemente 41 auf, die signalübertragungswirksam mit einer Ausgabeeinheit verbunden sind. Ausgegeben wird ein Steuerungssignal, das über eine Steuerungseinheit eine Regelung der Antriebsleistung des Materialförderers 30 signalabhängig bewirkt, wie grundsätzlich zuvor bereits erläutert wurde.

Zum einen als Überlastungsschutz der Druckerfassungselemente 41 und zum anderen aus Gründen eines vereinfachten Druckabbaus, kann die Revisionsklappe 16 stoffstromunterstützt geöffnet werden, wenn eine Grenzbelastung erreicht wird und eine Regelung des Materialförderers 30 nicht unmittelbar erfolgt, beispielsweise in den Fällen, wenn Latenzzeiten zu lang sind. Dafür ist die Revisionsklappe 16 inter alia über ein oder mehrere Federn an die längsseitigen Wände angeschlossen, wobei die Federkraft der Federn einem Öffnen der Revisionsklappe 16 entgegenwirken und sich die Revisionsklappe 16 erst bei einem materialstrombedingten Überschreiten der Grenzbelastung stoffstromunterstützt öffnet.

Einen Querschnitt durch das Ausführungsbeispiel aus Fig. 3 entlang der Schnittlinie A-A zeigt Fig. 4 mit geschlossener Revisionsklappe 16. Der Füllraum 15 des Behälters 10 ist in vier Förderzonen 18 aufgeteilt, wobei keine physischen Trennwände vorhanden sind, die die Förderzonen 18 baulich voneinander trennen, sodass die Abgrenzungen der Förderzonen 18 lediglich zeichnerisch durch gestrichelte Linien angedeutet werden. Durch die Förderzonen 18 ist der Füllraum 15 in vier Teilvolumina aufgeteilt, die nebeneinander angeordnet sind. Jeder Förderzone 18 ist eine Druckerfassungseinheit 40 und ein Förderelement 31 zugeordnet, das auf einer Förderschiene 32 geführt ist und unabhängig von den übrigen Förderelementen 31 regelbar ist.

Die Druckerfassungselemente 41 sind jeweils mittig in einer Förderzone 18 im Füllraum 15 an der Revisionsklappe 16 angeordnet, sodass in jeder Förderzone 18 auch bei einem geringen Füllstand Druckbelastungen noch grundsätzlich erfassbar sind. Die Druckbelastungsdaten werden über Ausgabeeinheiten als Steuerungssignal an eine Steuerungseinheit übermittelt. Wird ein Schwellenwert bzw. eine Grenzbelastung durch eine Ist-Druckbelastung erreicht, beispielsweise hervorgerufen durch ein lokal erhöhtes Materialaufkommen oder lokal höhere Schüttdichten, wird die Materialförderung in der bzw. in den entsprechenden Förderzonen 18 geregelt, derart, dass die Antriebsleistung des Materialförderers 30 förderzonenspezifisch verringert bzw. gestoppt wird. Die Materialförderung in den übrigen Förderzonen 18 wird währenddessen beispielhaft unverändert fortgesetzt oder gesteigert, sofern ein erhöhter Materialbedarf besteht, um einen homogenen und kontinuierlichen Materialaustrag gewährleisten zu können.

In der Steuerungseinheit sind mehrere Schwellenwerte hinterlegt, die unterschiedlichen Druckbelastungen zuordnenbar sind, sodass eine mehrfach abgestufte Regelung den Materialaustrag optimiert. Die Regelung der Antriebsleistung des Materialförderers 30 in den Förderzonen 18 erfolgt automatisiert. Einem Benutzer wird zur Information ein Hinweis über eine erfolgte Regelung auf ein mobiles Endgerät übermittelt.

Die Merkmale der dargestellten Ausführungsbeispiele können erfindungsgemäß grundsätzlich separat oder in unterschiedlichen Kombinationen verwirklicht sein.

### Bezugszeichen:

- 1: Silo
- 2: Elektromotor
- 10: Behälter
- 11: Boden
- 12: Seitenwand
- 14: Austragswand
- 15: Füllraum
- 16: Revisionsklappe
- 17: Durchlass
- 18: Förderzone
- 20: Austragseinheit
- 21: Austragsöffnung
- 22: Austragsschnecke
- 23: Profilboden
- 24: Auflösewalze
- 25: Lagerpunkt
- 30: Materialförderer
- 31: Förderelement
- 32: Förderschiene
- 33: Förderelement in Förderbewegung
- 34: Förderelement in Rückzugsbewegung
- 36: Materialstrom
- 40: Druckerfassungseinheit
- 41: Druckerfassungselement

## Patentansprüche

1. Silo (1) zur Aufnahme eines schüttfähigen Materials,
mit
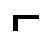 einem Behälter (10), wobei der Behälter (10) einen Boden (11) und wenigstens eine Seitenwand (12) aufweist und der Boden (11) und die Seitenwand (12) einen Füllraum (15) begrenzen,
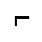 einer Austragseinheit (20), die eine Austragsöffnung (21) aufweist, für einen dosierten Materialaustrag aus dem Behälter (10),
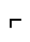 einer der Austragseinheit (20) nahen, als Austragswand (14) bezeichneten Seitenwand (12) oder Abschnitt einer Seitenwand (12), und
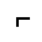 einem Materialförderer (30), der das Material unter Ausbildung eines Materialstroms (36) zur Austragseinheit (20) und in Richtung zur Austragswand (14) fördert,
**gekennzeichnet durch**
eine Druckerfassungseinheit (40), welche eine **durch** den Materialstrom (36) auf die Austragseinheit (20) und/oder auf die Austragswand (14) wirkende Druckbelastung erfasst, und die ein Ausgangssignal in Abhängigkeit von der Druckbelastung erzeugt.

2. Silo nach Anspruch 1,
**gekennzeichnet durch**
eine Steuerungseinheit und ein Steuerungssignal als Ausgangssignal,
wobei die Steuerungseinheit das Steuerungssignal verarbeitet, indem die Steuerungseinheit signalabhängig die Antriebsleistung des Materialförderers (30) regelt, derart,
dass die Antriebsleistung des Materialförderers (30) bei einer einen Grenzwert unterschreitenden materialstrombedingten Ist-Druckbelastung gesteigert und/oder bei einer einen Grenzwert überschreitenden materialstrombedingten Ist-Druckbelastung verringert oder gestoppt wird.

3. Silo nach Anspruch 1 oder 2,
**dadurch gekennzeichnet,**
**dass** die Austragseinheit (20) wenigstens ein Austragselement aufweist, welches rotationsbeweglich lagernd im Behälter (10) angeordnet ist,
und **dass** ein Druckerfassungselement (41) angeordnet ist, derart, dass eine auf die Lagerung des Austragselements wirkende, materialstrombedingte Druckbelastung erfassbar ist.

4. Silo nach einem der vorhergehenden Ansprüche,
**dadurch gekennzeichnet,**
**dass** die Austragswand (14) ein Druckerfassungselement (41) aufweist, das dazu bestimmt ist, eine materialstrombedingte Druckbelastung zu erfassen.

5. Silo nach Anspruch 4,
**dadurch gekennzeichnet,**
**dass** ein Druckerfassungselement (41) außerhalb des Füllraums (15) angeordnet ist.

6. Silo nach einem der vorhergehenden Ansprüche,
**dadurch gekennzeichnet,**
**dass** die Austragswand (14) eine Revisionsklappe (16) aufweist,
die wahlweise öffnenbar ist aus einer geschlossenen Betriebsstellung in eine einen Durchlass (17) in den Füllraum (15) freigebenden Revisionsstellung.

7. Silo nach Anspruch 6,
**dadurch gekennzeichnet,**
**dass** an die Revisionsklappe (16) ein Arbeitszylinder anschließt, der einen Stellungswechsel der Revisionsklappe (16) kraftunterstützt,
und der in Funktion eines Druckerfassungselements (41) eine materialstrombedingte Druckbelastung der Revisionsklappe (16) erfasst.

8. Silo nach Anspruch 6 oder 7,
**dadurch gekennzeichnet,**
**dass** die Revisionsklappe (16) ein Druckerfassungselement (41) aufweist.

9. Silo nach einem der vorhergehenden Ansprüche,
**dadurch gekennzeichnet,**
**dass** eine Kamera angeordnet ist, die die Austragswand (16) optisch erfasst.

10. Silo nach einem der vorhergehenden Ansprüche,
**dadurch gekennzeichnet,**
**dass** eine Lasereinheit angeordnet ist, die einen Laserstrahl emittiert, der auf die Austragswand (16) ausgerichtet ist.

11. Silo nach einem der vorhergehenden Ansprüche,
**dadurch gekennzeichnet,**
**dass** der Füllraum (15) in Förderzonen (18) eingeteilt ist, wobei jeder Förderzone (18) wenigstens ein Förderelement (31) und eine Druckerfassungseinheit (40) zugeordnet ist.

12. Verfahren zur Regelung einer Materialförderung in einem Behälter (10) eines Silos, mit den folgenden Verfahrensschritten:
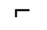 Erfassung einer auf eine Austragseinheit (20) und/oder auf eine Austragswand (14) wirkenden Druckbelastung, wobei die Druckbelastung durch das im Behälter (10) geförderte Material hervorgerufen wird, und
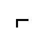 Regelung der Materialförderung,
derart,
dass die Materialförderung gesteigert wird, wenn eine Ist-Druckbelastung einen Grenzwert unterschreitet, und/oder dass die Materialförderung verringert oder gestoppt wird, wenn eine Ist-Druckbelastung einen Grenzwert überschreitet.

13. Verfahren nach Anspruch 12,
**dadurch gekennzeichnet,**
**dass** die Materialförderung zonenabhängig geregelt wird.

14. Verfahren nach einem der Ansprüche 12 oder 13,
**dadurch gekennzeichnet,**
**dass** die Materialförderung druckabhängig und ein Materialaustrag bedarfsabhängig aufeinander abgestimmt geregelt werden.

15. Verwendung einer Druckerfassungseinheit (40) bei einem Silo (1),
wobei das Silo (1) zur Aufnahme eines schüttfähigen Materials geeignet ist, und das Silo (1)
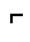 einen Behälter (10) aufweist, wobei der Behälter (10) einen Boden (11) und wenigstens eine Seitenwand (12) aufweist und der Boden (11) und die Seitenwand (12) einen Füllraum (15) begrenzen, und
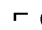 eine Austragseinheit (20) aufweist, die eine Austragsöffnung (21) aufweist, für einen dosierten Materialaustrag aus dem Behälter (10), und
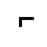 eine der Austragseinheit (20) nahen, als Austragswand (14) bezeichnete Seitenwand (12) oder Abschnitt einer Seitenwand (12) aufweist, und
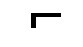 einen Materialförderer (30) aufweist, der das Material unter Ausbildung eines Materialstroms (36) zur Austragseinheit (20) und in Richtung zur Austragswand (14) fördert,
und die Druckerfassungseinheit eine durch den Materialstrom (36) auf die Austragseinheit (20) und/oder auf die Austragswand (14) wirkende Druckbelastung erfasst, und die ein Ausgangssignal in Abhängigkeit von der Druckbelastung erzeugt.
